# EUROPEAN PATENT APPLICATION

(11) **EP 0 691 498 A1**
(43) Date of publication of application: **10.01.1996**
(21) Application number: 95850128.0
(22) Date of filing: 06.07.1995
(51) Int. Cl.: F16L 21/03

(54) **Pipe joint sealing assembly**

(30) Priority: 06.07.1994 SE 9402394
(71) Applicant: SKEGA AB, S-934 81 Ersmark (SE)
(72) Inventor: Rönnerdag, Olof, S-934 93 Ersmark (SE)
(74) Representative: Onn, Thorsten

(57) **Abstract**

The invention relates to a pipe-connection sealing arrangement which includes an annular sealing element (30) mounted on a first pipe-end and intended to engage sealingly a connecting surface (20) on a second pipe-end (20) adjacent thereto when the pipe-ends are moved axially in relation to one another to establish the pipe connection. In order to simplify this known sealing arrangement to an extent such as to enable the pipe connection to be established immediately the pipes have been laid in position without needing to manually remove any form of protective mould part or to clean the pipe connecting region from dirt and other foreign particles, it is proposed, among other things, that there is mounted on the sealing element (30) a casing member (40) which as the pipe-ends move relative to one another engages the second pipe-end (20) and is moved away from the sealing element (30) by the second pipe-end.

## Description

The present invention relates to a pipe connection sealing arrangement of the kind which includes an annular sealing element mounted on a first pipe-end and functioning to engage sealingly a coupling surface on a second pipe-end connecting with the first pipe-end when the pipe-ends are moved axially in relation to one another to establish a pipe connection.

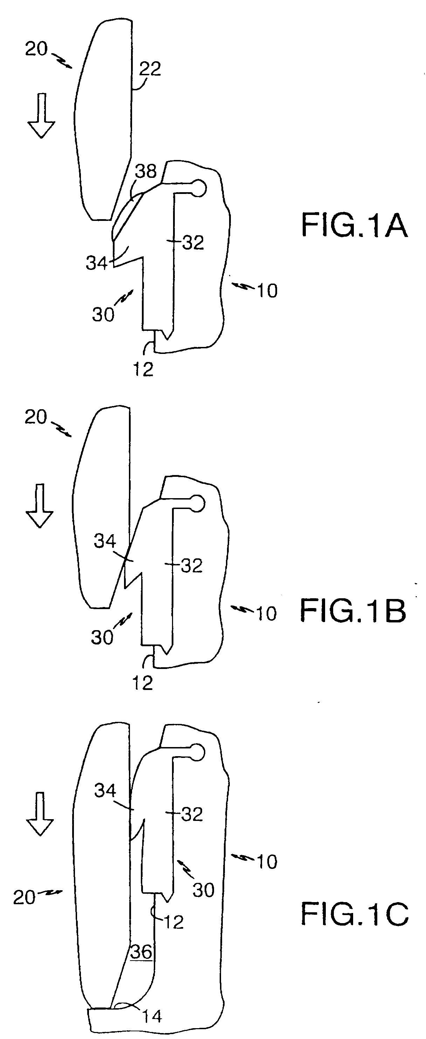

FIGS. 1A-C of the accompanying drawings illustrate schematically a known embodiment of one such sealing arrangement, this embodiment comprising a socket-end or muff-end 10 and an insertion-end 20 of a pair of concrete pipes which are coupled together by pressing the insert-end 20 axially into the muff-end 10 with the aid of apparatus not shown. A rubber sealing ring 30 is fitted to the cylindrical inner surface 12 of the muff-end 10 to seal and secure the resultant pipe coupling.

The sealing ring 30 is moulded on the inside 12 of the muff-end 10 through the medium of an attachment part 32 in some suitable manner in the manufacturing stage of the concrete pipes and includes a sealing part 34 which projects radially outwards from the ring. In the pipe coupled position shown in FIG. 1C, the sealing ring 30 coacts with the outer surface 22 of the insert-end 20 so as to seal and secure the pipe join, roughly in the manner illustrated.

In order to keep the annular region 36 (Fig 1C) located axially behind the sealing ring 30 free from dirt, foreign particles, ice, etc., which are liable to impair the efficiency of the sealing arrangement, said region is filled-out with a mould part (not shown) which may be made of a cellular plastic material and which is not removed until the pipe connection is to be established, thereby ensuring that this region or area will remain free of such seal-impairing dirt and the like, said mould part being removed manually, e.g. stripped-off.

It is also known to apply a glide agent 38 (FIG. 1A) when establishing the pipe connection, for instance on that side of the sealing ring 30 which faces towards the insert-end 20, so as to reduce friction and lower the compression force required to establish the connection.

One object of the present invention is to simplify such sealing arrangements so that a pipe connection can be established immediately the pipes are laid in position, without needing to manually remove any protective mould part or to clean the pipe-joining region.

This object is achieved with the inventive sealing arrangement having the characteristic features set forth in the characterizing clause of the following Claim 1.

According to one aspect of the invention, the sealing element is mounted on a casing member which as the pipe-ends are moved relative to one another is intended to engage the second pipe-end and to be moved thereby away from the sealing element. Such a casing member is thus able to protect the area around the sealing element from the ingress of dirt and the like during storage and transportation of the pipes and moved away automatically so that the final stage of the pipe sealing operation can be completed as the pipe-ends move axially relative to one another when making the pipe connection.

In order to ensure that the entire pipe coupling area will be kept clean from foreign particles, the casing member extends to a bottom surface in the first pipe-end. In this case, the corresponding part of the casing member can be permitted to crumple or to be deformed in some other way in the free annular space defined between the pipe-ends rearwardly of the sealing element in the established pipe connection.

Alternatively, the casing member may be provided with a peripheral fracture weakening or directive between a forward and a rearward part of said member, so that instead of crumpling or otherwise deforming, the casing member will separate into two parts which telescope to a mutually concentrical position in said annular space as the pipe-ends are pressed together in establishing the pipe connection.

A bead of glide agent may be provided between the casing member and the sealing element, so as to obviate the need of applying a glide agent prior to connecting the pipes. The glide agent may conveniently have the form of a bead applied to the surface of the casing member that faces the sealing element, prior to placing the casing member in position around the sealing element in conjunction with manufacturing the pipes.

Other features of the invention and advantages afforded thereby will be apparent from the remaining Claims and also from the following detailed description.

The invention is described below in more detail with reference to the accompanying drawings, in which, as before mentioned, **FIGS. 1A-C** illustrate schematically three stages in the establishment of a pipe connection according to a known technique; **FIG. 2** is a longitudinal sectional view of an inventive sealing arrangement, with parts removed; **FIG. 3** is a cross-sectional view of an inventive casing member; **FIG. 4** is a perspective view of a pair of connectable end-parts of an inventive casing member; and **FIGS. 5A-C** illustrate schematically three stages of establishing a pipe coupling with the aid of an inventive sealing arrangement.

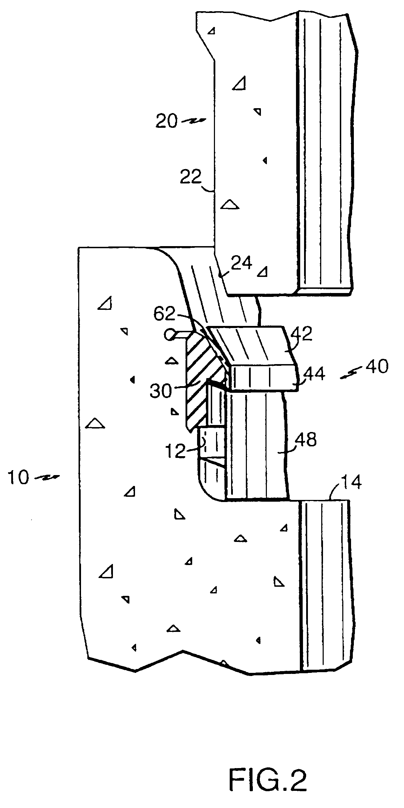

The inventive sealing arrangement illustrated in FIGS. 2-5 thus includes a casing member, generally referenced 40, which in the illustrated case is intended to encircle and cover a rubber sealing ring 30 at one pipe-coupling end, in the illustrated case a muff or socket-end 10 of a concrete pipe.

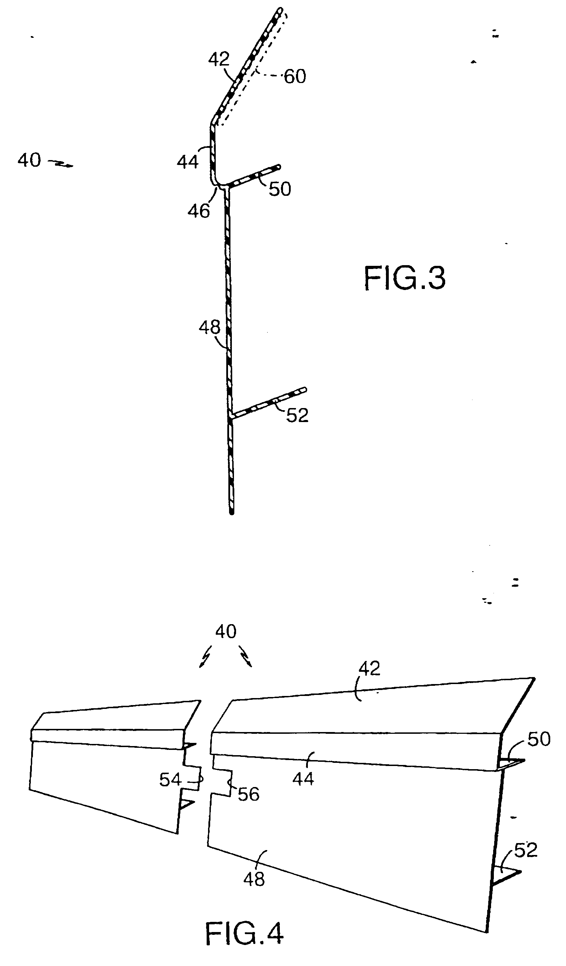

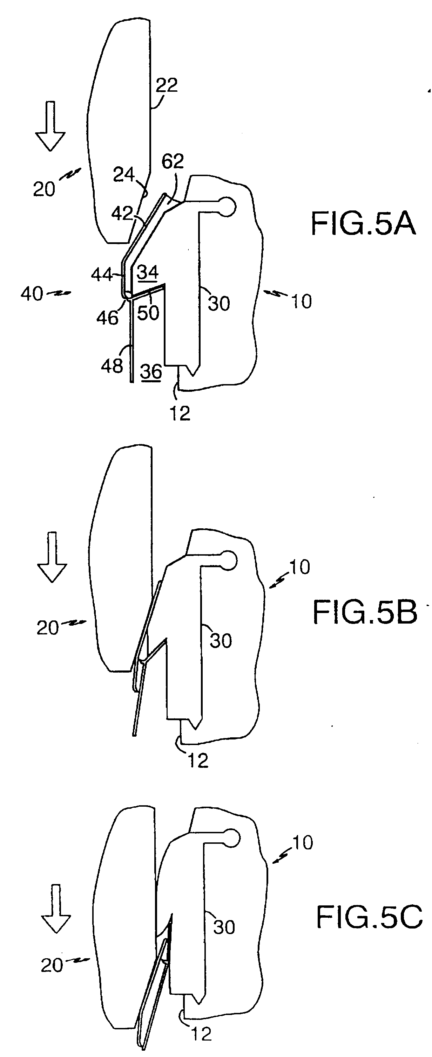

Referring particularly to FIGS. 3 and 4, the casing member 40 of the illustrated embodiment is comprised of a thin, flexible extruded plastic section, for instance made of PVC although other plastic materials may be used. The casing member 40 can be generally considered to comprise a front part which is intended to cover the outwardly projecting sealing part 34 (FIG. 5A) of the sealing ring 30, and a rear part which is intended to cover the aforesaid annular space 36 located between the outwardly projecting sealing part 34 and a bottom surface 14 on the muff-end 10.

The forward part of the casing member 40 includes a forwardly terminating and inwardly angled flange 42 which connects with a web part 44. When the casing member 40 is fitted (FIGS. 2 and 5A), the flange 42 and the web 44 are parallel with and intended to abut or be spaced only slightly from adjacent sides of the sealing ring attachment part 44.

The rearward part of the casing member 40 includes a rearwardly terminating web part 48 which, when the casing member 40 is fitted, extends to the bottom surface 14 on the muff-end 10. Extending from the web part 48 are two flanges 50, 52, of which the forward flange 50 extends parallel with and immediately adjacent to the rear side of the sealing ring attachment part 34, whereas the rear flange 52 extends up to the inside 12 of the muff-end 10.

As will best be seen from FIG. 3, the aforedescribed forward and rearward parts of the casing member 40 are delimited by a fracture weakening in the form of a material-reducing notch 46, this notch functioning to mutually separate the forward and rearward parts of said member in a manner described in more detail below with reference to establishing a pipe connection with the aid of the inventive casing member 40.

FIG. 4 illustrates a principle example of a method for connecting together the two adjacent ends of a casing member section having a length adapted to the inner circumference of the aforedescribed muff-end 10. In the illustrated case, one adjacent end includes a tongue 54 and the other adjacent end includes a tongue-complementary recess 56. The length-adapted casing member section 40 is fitted outside the radially inward side of the sealing ring 30 on the muff-end 10, for instance in accordance with the following procedure (not shown): The casing member 40 is bent to a ring shape and joined by means of the tongue 54 and the recess 56, such that the adjacent ends of the casing member 40 project slightly inwardly of one another to an extent corresponding to the length of the tongue 54 and the recess 56 respectively; a peripheral region of the thus formed ring is then bent locally inwards towards the centre of the ring while reducing the width of the ring by flexing the ring inwards; the ring can now be inserted inside the muff-end 10 into abutment with the bottom 14 without being obstructed by the outwardly projecting part 34 of the sealing ring 30, whereafter the inwardly flexed ring is relaxed so as to return resiliently to its original ring shape, thereby firmly locking the completed casing member in position, as shown in FIG. 2. Alternatively, it is possible to insert the casing member 40 in position from an outwardly straightened state and to join together the ends of said member upon completion of this operation.

As illustrated in FIG. 3, a strip of glide agent 60 may advantageously be previously applied to the inner surface of the forwardly terminating flange 42 of the casing member 40, this glide agent being required to facilitate pressing of the muff-end 10 and the connecting insert-end 20 of an adjacent concrete pipe into one another. However, if desired, the glide agent may instead be pre-applied to an adjacent side of the outwardly projecting part 34 of the sealing ring 30, as indicated, e.g., at 62 in FIG. 5A.

When an insert-end 20 of a concrete pipe is pressed axially into a muff-end of a connecting concrete pipe, the inventive sealing arrangement will function approximately in the following manner, as illustrated in FIGS. 5A-5C.

A bevelled outer end 24 on the outside 22 of the insert-end 20 first comes into contact with the forwardly terminating flange 42 of the casing member 40 and engages therein with a friction grip. As the insert-end continues to move in the direction of the arrow, the forward part of the casing member 40 will be dogged by the bevelled outer end 24 of the insert-end 20. This quickly results in separation of the forward casing member part from the rearward casing member part at the peripheral fracture weakening 46. This continued movement of the insert-end exposes the glide-agent coated side of the outwardly projecting part of the sealing ring 30 to the outside 22 of the insert-end 20 and comes into contact therewith. At the same time, the separated forward part of the casing member 40 is pushed telescopically into the rearward part of said member, therewith forcibly expanding the rearward part radially into the space which lies rearwardly of the outwardly projecting part of the sealing ring 30 and which was earlier protected against the ingress of dirt and other foreign particles, etc., by the casing member 40. Movement of the insert-end 20 into the muff-end is then continued in a known manner, so as to be located finally in its terminal position (not shown) in the muff-end 10.

Instead of the aforedescribed separable configuration, it lies within the scope of the following Claims for the casing member to be constructed to deform in other ways, for instance by uncontrolled crumpling or by folding along pre-made folding directives, such as a bellows-type arrangement.

It is presumed that one skilled in this art will become aware that the described and illustrated embodiments can be modified in various ways when studying the above description.

The description is not intended to limit the scope of the invention, but rather to illustrate a preferred embodiment thereof.

## Claims

1. A pipe connection sealing arrangement which includes an annular sealing element (30) firmly attached to a first pipeend (10) and intended to engage sealingly with a connecting surface (22) of a second pipe-end (20) connecting with said first pipe-end when said pipe-ends are moved axially in relation to one another to establish said pipe connection, wherein the arrangement includes a cover member which is intended to cover said sealing element (30) and to engage the second pipe-end (20) in said relative movement so as to be moved away from the sealing element (30) by said second pipeend, **characterized** in that said cover member is a casing member (40) having an axially rearward part (48) which prior to establishing the pipe connection functions to cover protectively an annular space (36) defined between the sealing element (30) and a radially projecting bottom surface (14) of the first pipe-end (10).

2. A sealing arrangement according to Claim 1, **characterized** by a glide agent (60; 62) applied between an axially forward part (42, 44) of the casing member (40) and the sealing element (30).

3. A sealing arrangement according to any one of the preceding Claims, **characterized** in that the casing member (40) includes a profiled, ring-shaped plastic band.

4. A sealing arrangement according to any one of the preceding Claims, **characterized** in that the casing member (40) includes a fracture weakening (46) which functions to separate an axially forward part (42, 44) from a remaining, axially rearward part (48, 50, 52) of the casing member as the two pipe-ends move relative to one another.

5. A sealing arrangement according to any one of Claims 1-3, **characterized** in that the casing member (40) is deformable, e.g. by crumpling, or by folding, during relative movement of said pipe-ends.
